# EUROPÄISCHE PATENTSCHRIFT

(11) **EP 0 623 640 B1**
(45) Veröffentlichungstag und Bekanntmachung des Hinweises auf die Patenterteilung: **30.09.1998**
(21) Anmeldenummer: 94106567.4
(22) Anmeldetag: 27.04.1994
(51) Int. Cl.: C08G 75/20, C08G 75/02, C08G 75/18

(54) **Zweistufige Oxidation von Polyarylensulfiden**
Two-step oxidation of poly (arylene sulfide)
Oxidation en deux étapes de polysulfure d'arylène

(30) Priorität: 04.05.1993 DE 4314737
(43) Veröffentlichungstag der Anmeldung: 09.11.1994
(73) Patentinhaber: Ticona GmbH, 65926 Frankfurt am Main (DE)
(72) Erfinder: Fleischer, Dietrich, Dr., D-64287 Darmstadt (DE); Strutz, Heinz, Dr., D-61250 Usingen (DE); Kulpe, Jürgen, Dr., D-65929 Frankfurt (DE); Schleicher, Andreas, Dr., D-64683 Einhausen (DE)

(56) Entgegenhaltungen:
- EP-A- 0 091 088
- DE-A- 1 938 806
- US-A- 3 303 087
- US-A- 3 326 865
- US-A- 3 948 865
- US-A- 4 563 509
- KOBUNSHI RONBUNSHU (JAPANESE POLYMER SCIENCE AND TECHNOLOGY) Bd. 37, Nr. 6 , 1980 , TOKYO JP Seite 448 YOSHIO IMAI ET ALL. 'SYNTHESE OF POLYSUFOXIDES AND POLSULFONES BY SELECTIVE OXIDATION OF ALIPHATIC POLYSULFIDES'
- CHEMICAL ABSTRACTS, vol. 80, no. 24, 17. Juni 1974, Columbus, Ohio, US; abstract no. 134087u, Seite 19 ; & JP-A-4 823 560 (SAGAMI CHEMICAL RESEARCH) 14. September 1970

## Beschreibung

Die Erfindung betrifft die Oxidation von Polyarylensulfiden in einem zweistufigen Verfahren mit Ozon und Wasserstoffperoxid als Oxidationsmittel.

Polyarylensulfide sind seit geraumer Zeit bekannt. Aufgrund ihrer hohen Wärmeformbeständigkeit und guten Chemikalienresistenz werden diese Polymere für hochbeanspruchte Bauteile herangezogen. Bei einigen Anwendungen werden jedoch höhere Materialanforderungen gestellt. Speziell ist häufig eine Anhebung der Glastemperatur der Polymeren wünschenswert. Dies soll erreicht werden durch eine polymeranaloge Oxidation von Polyphenylensulfid zu Polyphenylensulfoxid in Essigsäure mit konzentrierter Salpetersäure während 24 Stunden bei 0 bis + 5 °C (US 3,303,007). Die angeführten Eigenschaftswerte für das gebildete Polymer deuten jedoch darauf hin, daß kein Polymeres mit einem Schwefel/Sauerstoff-Verhältnis von 1 zu 1 erhalten wurde, da die Werte für die Wärmeformbeständigkeit nicht erhöht waren. Unter "polymeranalog" ist die Umwandlung eines Polymeren in ein anderes zu verstehen. Nachteile des Verfahrens sind erstens die benötigte lange Reaktionszeit, zweitens die Möglichkeit einer elektrophilen Addition und drittens der acide Angriff der starken mineralischen Säure an der Thioetherbindung bei langen Reaktionszeiten (Abbaureaktionen).

Eine Methode zur Oxidation von Polyarylensulfiden, z.B. Polyphenylensulfid (PPS) mit Wasserstoffperoxid in konzentrierter Schwefelsäure zu den entsprechenden Polyarylensulfonen (PPSSO₂) ist bekannt (GB-A 1 365 486, DE-A 1 938 806). Nachteile des Verfahrens sind auch hier der acide Angriff der starken mineralischen Säure an der Thioetherbindung, ferner die Möglichkeit einer elektrophilen Addition, die Bildung von inhomogenen Produkten und weiterhin die Aggressivität der Schwefelsäure.

US 3948865 beschreibt die Behandlung von Polyarylensulfid unter anderem mit Wasserstoffperoxid in Essigsäure zur Erhöhung des Schmelzflusses des Polymers.

Neben der Verwendung von Wasserstoffperoxid in konzentrierter Schwefelsäure bei der Oxidation von Polyarylenthioethern wird auch der Einsatz eines Wasserstoffperoxid/Essigsäuregemisches zur Oxidation von sulfongruppenhaltigen aromatischen Polythioethern beschrieben (Gabler et. al, Chimia, 28 (1974), 567). Diese Verfahren sind jedoch mit einem sehr hohen Zeitaufwand und hohen Temperaturen verbunden. Zudem werden zur Herstellung nur Polymere mit niedrigen Molekulargewichten eingesetzt.

Aufgabe der Erfindung ist es, ein Verfahren zur Herstellung von Polyarylenthioethern bereit austellen, die wiederkehrende Einheiten aus Aryleneinheiten und Sulfid/Sulfoxid/Sulfoneinheiten sowie Sulfoxid/Sulfoneinheiten aufweisen. Sie wurde gelöst durch ein zweistufiges Oxidationsverfahren von linearen und verzweigten Polyarylenthioethern, wobei in erster Stufe Ozon und in zweiter Stufe Wasserstoffperoxid bzw. Gleichgewichtspersäuren als Oxidationsmittel eingesetzt wird.

Die Erfindung bezieht sich daher auf ein Verfahren zur Oxidation von Polyarylensulfiden in zwei Stufen, bei dem in erster Stufe ein Polymer in fester Form in einem Suspensionsmedium mit Ozon bei einer Reaktionstemperatur von minus 10°C bis +80°C und einer Reaktionszeit bis zu 2 Stunden oxidiert wird, wobei der Umsatz der Sulfidgruppe teilweise oder vollständig zur Sulfoxidgruppe erfolgt, und das erhaltene Reaktionsprodukt in zweiter Stufe in Essigsäure unter Zusatz von Gleichgewichtspersäuren und/oder in Essigsäure mit Wasserstoffperoxid in Gegenwart von 0,1 - 10 Vol.-% Schwefelsäure umgesetzt wird und wobei das Oxidationsmittel in solchen Mengen zugesetzt wird, daß Verbindungen bestehend aus Aryleneinheiten und Sulfid/Sulfoxid/Sulfoneinheiten oder Sulfoxid/Sulfoneinheiten erhalten werden.

Beansprucht wird ferner die Verwendung der erfindungsgemäß hergestellten Polyarylenverbindungen als Ausgangsmaterial für die Herstellung von Form- und Funktionsteilen.

Durch das zweistufige Verfahren gemäß der Erfindung werden die Thioethergruppen der Ausgangsverbindungen teilweise oder vollständig in Sulfoxid und/oder Sulfongruppen überführt. Die divalente Sulfidgruppe der Ausgangsverbindungen bleibt hierdurch entweder teilweise erhalten oder wird vollständig oxidiert. Durch das Verfahren ist es möglich geworden, gezielte Mengenverhältnisse der Gruppierungen Sulfid/Sulfoxid/Sulfon in den neuen Verbindungen zu erhalten. Während in der ersten Stufe der Umsatz der Sulfidgruppe teilweise oder vollständig zur Sulfoxidgruppe erfolgt, wird in der zweiten Verfahrensstufe durch den Einsatz von Wasserstoffperoxid oder äquivalenten Verbindungen die Sulfoxidgruppe vorrangig zur Sulfongruppe oxidiert. Der Anteil der Sulfongruppen in der resultierenden Verbindung ist abhängig von der Menge des Oxidationsmittels, das in der zweiten Stufe angewandt wird. Das Verfahren der Oxidation von Polyarylensulfiden mit Ozon und die daraus hergesteliten Verbindungen sind in den deutschen Patentanmeldungen P 43 14 736.4, Titel: "Oxidation von Polyarylensulfiden" und P 43 14 735.6 Titel: "Oxidierte Polyarylensulfide" beschrieben, die am 4. Mai 1993 eingereicht worden sind. Das Verfahren zur Oxidation von Thioethergruppen mit Wasserstoffperoxid oder Gleichgewichtspersäuren ist in der deutschen Patentanmeldung P 43 14 738.0, Titel: "Verfahren zur Oxidation von Thioethergruppen enthaltenen Polyarylenverbindungen" beschrieben, die ebenfalls am 4. Mai 1993 eingereicht worden ist. Auf die genannten Anmeldungen wird hiermit Bezug genommen.

Verwendbare Ausgangspolymere sind beispielsweise Polyarylenthioether mit wiederkehrenden Einheiten der Formeln (II) - (VI), deren Synthesen z. B. in Chimia 28 (1974), 567 beschrieben sind: 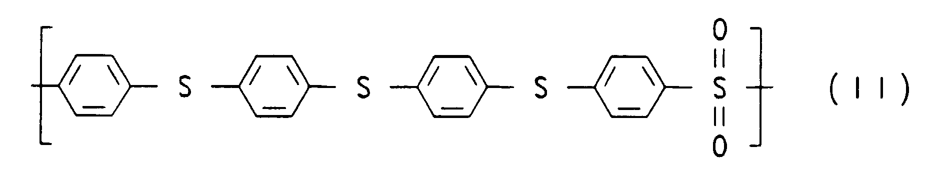 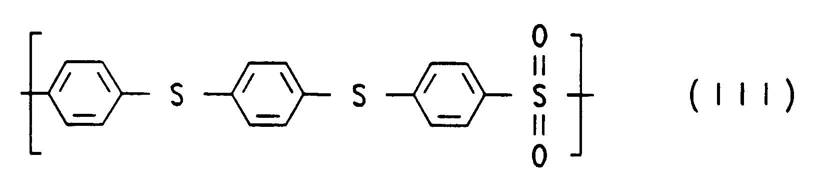 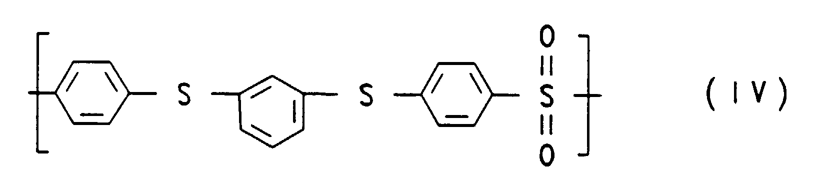 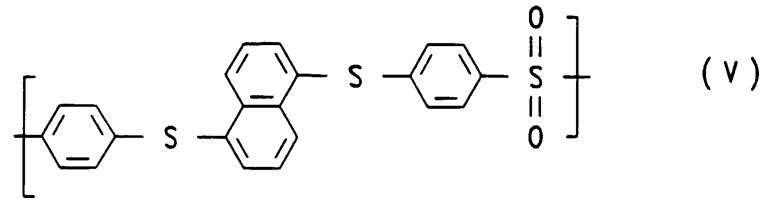 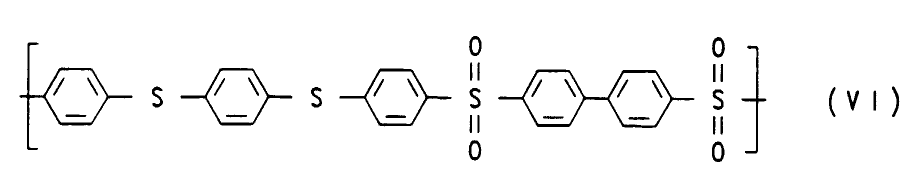 sowie Polyarylenthioether mit wiederkehrenden Einheiten der Formel (VII), die z.B. in US-A-4,016,145 beschrieben sind.

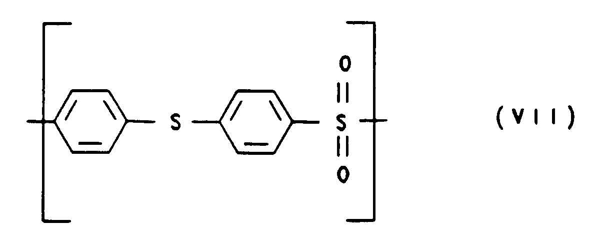

Bevorzugt als Polyarylenthioether ist Polyphenylensulfid (PPS) mit der wiederkehrenden Einheit der Formel (VIII), dessen Herstellungsprozess z. B. in den US-Patenten 3,354,129, 3,919,177, 4,038,262 und 4,282,347 beschrieben ist.

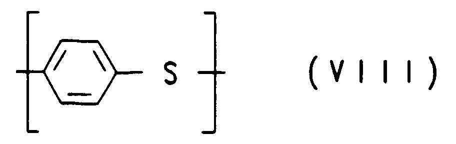

Verbindungen der Formel VIII sind im allgemeinen 1,4-verknüpfte Polyarylensulfide, die bis zu einem Anteil von 30 Mol-% eine 1,2- und/oder 1,3 Verknüpfung am aromatischen Kern aufweisen können.

Für die Erfindung sind im allgemeinen Polyarylenthioether geeignet, die ein mittleres Molekulargewicht von 4 000 bis 200 000, vorzugsweise von 10 000 bis 150 000, insbesondere 25 000 bis 100 000, bestimmt durch GPC, aufweisen.

Die Teilchengröße der eingesetzten Polymere liegt im allgemeinen im Bereich von 5x10⁻⁶ bis 500x10⁻⁶ m, vorzugsweise 10x10⁻⁶ bis 300x10⁻⁶ m und insbesondere 10x10⁻⁶ bis 200x10⁻⁶ m.

Die Reaktionstemperaturen bei der Oxidation in erster Stufe mit Ozon liegen im Bereich von -10 bis +80 °C, vorzugsweise von 0 bis 50 °C. Die erforderliche Reaktionszeit hängt von dem Angebot an Ozon und dem gewählten Reaktortyp ab und beträgt im allgemeinen 1 Minute bis 2 Stunden, vorzugsweise 5 bis 90 Minuten und insbesondere 5 bis 60 Minuten.

Allerdings ist es auch möglich, bei einer Optimierung der Reaktionsbedingungen auf Zeiten unter einer Minute zu kommen.

Die Oxidation in der ersten Stufe wird in einem ozonhaltigen Gasstrom durchgeführt, in dem das Ozon im allgemeinen in einer Konzentration von 0,1 bis 9 Vol.-%, vorzugsweise 2 bis 6 Vol.-%, enthalten ist. Als Trägergas für das Ozon sind Sauerstoff oder Inertgase, wie Stickstoff oder auch Gemische aus diesen geeignet. Ebenfalls kann getrocknete Luft bei der Erzeugung des Ozons eingesetzt werden. Das Ozon wird im allgemeinen durch in der Technik bekannte Methoden, z.B. durch stille elektrische Entladung, erzeugt.

Die Reaktion wird in einem temperierbaren, für Begasungsreaktionen geeigneten Reaktionsgefäß durchgeführt. Dies kann beispielsweise ein begaster Rührkessel oder eine Blasensäule sein.

Als Suspensionsmedien sind alle unter den Reaktionsbedingungen als inert geltende flüssige Verbindungen geeignet, z.B. Wasser, niedere aliphatische Alkohole und Carbonsäuren mit jeweils 1-6, vorzugsweise 1-3 C-Atomen in der Alkylgruppe, die Ester aus den beiden vorgenannten Verbindungsklassen, Kohlenwasserstoffe mit 1-12 C-Atomen, die mit Chlor oder Fluor halogeniert sein können und Gemische aus den genannten Verbindungen. Auch Mineralsäuren sind geeignet, z.B. konzentrierte Schwefelsäure. In protischen Lösungsmitteln oder protische Lösungsmittel enthaltenden Lösungsmittelgemischen kann der Zusatz einer Mineralsäure, z.B. Schwefelsäure, von Vorteil sein.

Beispielsweise wird in Methylenchlorid in kurzer Zeit eine vollständige Oxidation zum Sulfoxid erreicht. Dagegen wird bei Einsatz von niederen aliphatischen Carbonsäuren mit einem Zusatz einer Mineralsäure nur eine teilweise Oxidation erzielt, da die Aufnahmegeschwindigkeit des Ozons bei Erreichen eines Schwefel/Sauerstoffverhältnisses von 1:0,5 deutlich absinkt. Es ist zwar möglich, auch hier eine vollständige Oxidation zu erreichen, jedoch sind dafür unwirtschaftlich lange Reaktionszeiten nötig.

Das Suspensionsmedium löst im allgemeinen keine oder nur sehr geringe Mengen des Polymeren, es fungiert jedoch als Wärme- und Ozonüberträger und hat steuernden Einfluß auf die Selektivität. Die Reaktion kann zwar auch in nicht flüssiger Phase durchgeführt werden, jedoch muß dann für eine lebhafte Durchmischung des Polymerpulvers gesorgt werden, da sonst an der Stelle des Ozoneintrags eine lokale Überhitzung (hot-spot) stattfinden kann, welche sich negativ auf die Oxidationsselektivität auswirkt.

Die durch die Umsetzung mit Ozon gewonnenen Verbindungen werden in einer zweiten Stufe in fester Substanz, beispielsweise in Essigsäure, entweder mit Wasserstoffperoxid unter Verwendung katalytischer Mengen an konzentrierter Schwefelsäure oder unter Vorlage einer Gleichgewichtspersäure, zu den entsprechenden Verbindungen gemäß der Formel I umgesetzt. Als Essigsäure wird vorzugsweise Eisessig eingesetzt.

Als Gleichgewichtspersäure kann jede in Essigsäure lösliche organische Persäure verwendet werden. Vorzugsweise wird dabei die der Essigsäure zugrundeliegende Persäure, die Peressigsäure, eingesetzt.

Wasserstoffperoxid wird im allgemeinen in Form seiner 30 %igen wäßrigen Lösung eingesetzt. Jedoch können auch höherprozentige Oxidationsmittel dieser Art verwendet werden.

Wird ohne die Vorlage von Gleichgewichtspersäuren gearbeitet, erfolgt eine katalytische Zugabe von 0,1 bis 10, vorzugsweise von 1 bis 5 Vol.-% an konzentrierter Schwefelsäure, bezogen auf die Menge der eingesetzten Essigsäure.

Die Reaktion in zweiter Stufe findet unter den angegebenen Bedingungen bei Temperaturen von 40 bis 90 °C, bevorzugt von 45 bis 65 °C, statt. Die zugehörigen Reaktionszeit beträgt 0,5 bis 12 Stunden, wobei 1 bis 4 Stunden bevorzugt sind. Um mögliche Reste von Peroxidverbindung sicher zu zersetzen, kann der Ansatz am Ende der Reaktion kurzzeitig auf Temperaturen über 90 °C, z.B. bis an den Siedepunkt des Reaktionsgemisches, erhitzt werden.

Die gemäß der Erfindung erhaltenen Polyarylenverbindungen lassen sich entweder thermoplastisch verarbeiten oder können beispielsweise durch gängige Sinterverfahren weiterverarbeitet werden. Dies ist abhängig von den Schmelzpunkten der erhaltenen Polyarylenverbindungen. Die erste Gruppe kann durch die für Thermoplaste üblichen Verarbeitungsmethoden, z. B. Spritzguß oder Extrusion, in Form- und Funktionsteile übergeführt werden. Die Formmassen können auch bekannte pulverförmige Füllstoffe, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Die zweite Gruppe, d.h. die durch Sinterverfahren verarbeitbaren Polymere, findet Verwendung bei Funktionsteilen mit einer hohen Temperatur- und Chemikalienbelastung.

In den Beispielen bedeutet Tg die Glasumwandlungstemperatur, Tm ist der Schmelzpunkt.

### Beispiele

### 1) Polyphenylensulfoxid (PPSO)

In einem Reaktionsgefäß mit Scheibenrührer wurden 54,1 g eines Polyphenylensulfid-(PPS)-Pulvers (MW 40 000) mit einem mittleren Partikeldurchmesser von 20 x 10⁻⁶ m, in 400 ml Methylenchlorid suspendiert. In die Suspension wurde bei Temperaturen von -5 bis -7°C Ozon-haltiges Gas eingeleitet bis 0,5 Mol Ozon aufgenommen waren (72 Minuten). Die Ozonkonzentration betrug während der Begasung 51 bis 115 Gramm pro Kubikmeter Trägergas. Nach der Reaktion wurde das Polymerpulver abgesaugt und getrocknet. Im Infrarotspektrum konnte nur die ausschließliche Bildung von Sulfoxid-Gruppen beobachtet werden. Tg: 240°C, Tm: ≥370°C (Zersetzung).

| Elementaranalyse: C₆H₄SO | | | |
|---|---|---|---|
| C 58,04 | H 3,25 | S 25,82 | O 12,89 (ber.) |
| C 58,3 | H 3,5 | S 25,45 | O 12,75 (gef.) |

Das Schwefel/Sauerstoff-Verhältnis des erhaltenen Polymers betrug 1:1.

### 2. Polyphenylensulfidsulfoxid (PPS/SO)

In einer temperierbaren Blasensäule (5 cm Durchmesser, 120 cm Länge) wurden 216 g eines PPS-Pulvers wie in Beispiel 1 in einer Mischung aus 850 ml Eisessig und 8,5 ml Schwefelsäure suspendiert. Bei 10 bis 20°C wurde die Suspension über eine Glasfritte mit einem Ozon-haltigen Gasstrom (Strömungsgeschwindigkeit 180-200 l/h) mit einer Konzentration von 50 bis 100 Gramm Ozon pro Kubikmeter Gas begast. Nach 80 Minuten wurde die Reaktion nach Aufnahme von 48 g Ozon abgebrochen, weil sich zu diesem Zeitpunkt ein deutlicher Abfall der Reaktionsgeschwindigkeit abzeichnete. Anschließend wurde das Polymerpulver abfiltriert, mehrmals mit kleinen Mengen Wasser gewaschen und dann bei 30 mbar und 50 - 100°C getrocknet.

Im IR-Spektrum sind nur Sulfoxid-Gruppen zu erkennen.
Das Schwefel/Sauerstoff-Verhältnis bei dem erhaltenen Polymer betrug 1:0,51.

### 3. Polyphenylensulfidsulfon (PPS/SO₂)

5,81 g Polyphenylensulfidsulfoxid, hergestellt nach Beispiel 2, wurden in 50 ml Eisessig, welche 0,13 ml konz. Schwefelsäure enthielten, suspendiert. Nach Zugabe von 0,98 g Wasserstoffperoxid (87 Gew-.%ig) bei 25 °C stieg die Temperatur auf 34 °C. Die Suspension wurde dann für 3 1/2 Stunden bei 65 °C gerührt. Anschließend wurde das Polymerpulver abgesaugt, mit Wasser gewaschen und über Nacht bei 20 mbar und 100 °C getrocknet. Ausbeute: 6,1 g = 98 % d.Th.
Im IR-Spektrum sind die Schwingungen für die Sulfoxid-Gruppen verschwunden, es ist nur eine starke Schwingung bei 1170 cm⁻¹ zu beobachten, die der Sulfon-Gruppe zuzuordnen ist.
Das Schwefel/Sauerstoff-Verhältnis hat sich von 1:0,51 auf 1:0,97 erhöht.

## Patentansprüche

1. Verfahren zur Oxidation von Polyarylensulfiden in zwei Stufen, dadurch gekennzeichnet, daß in erster Stufe ein Polymer in fester Form in einem Suspensionsmedium mit Ozon bei einer Reaktionstemperatur von minus 10°C bis +80°C und einer Reaktionszeit bis zu 2 Stunden oxidiert wird, wobei der Umsatz der Sulfidgruppe teilweise oder vollständig zur Sulfoxidgruppe erfolgt, und das erhaltene Reaktionsprodukt in zweiter Stufe in Essigsäure unter Zusatz von Gleichgewichtspersäuren und/oder in Essigsäure mit Wasserstoffperoxid in Gegenwart von 0,1 - 10 Vol.-% Schwefelsäure umgesetzt wird und wobei das Oxidationsmittel in solchen Mengen zugesetzt wird, daß Verbindungen bestehend aus Aryleneinheiten und Sulfid/Sulfoxid/Sulfoneinheiten oder Sulfoxid/Sulfoneinheiten erhalten werden.

2. Verfahren nach Anspruch 1, dadurch gekennzeichnet, daß in erster Stufe als Suspensionsmedium Mineralsäure, ein aliphatischer Alkohol, eine aliphatische Carbonsäure mit jeweils 1-6 C-Atomen im Alkylrest, ein Carbonsäureester aus diesen Verbindungen, halogenierte oder nicht halogenierte Kohlenwasserstoffe mit 1-12 C-Atomen oder eine Mischung aus den genannten Verbindungen eingesetzt wird.

3. Verfahren nach Anspruch 1 oder 2, dadurch gekennzeichnet, daß die Gleichgewichtspersäure Peressigsäure ist.

4. Verfahren nach einem oder mehreren der Ansprüche 1 bis 3, dadurch gekennzeichnet, daß als Essigsäure konzentrierte Essigsäure eingesetzt wird.

5. Verfahren nach einem oder mehreren der Ansprüche 1 bis 4, dadurch gekennzeichnet, daß ein Polyarylenthioether mit wiederkehrenden Einheiten der Formeln: 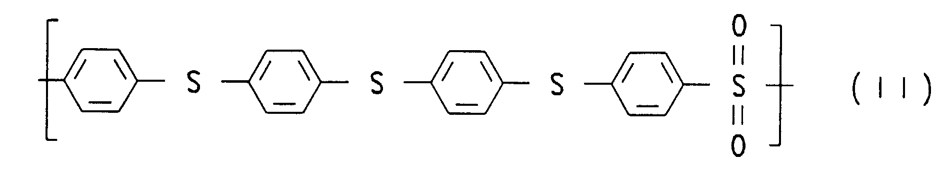 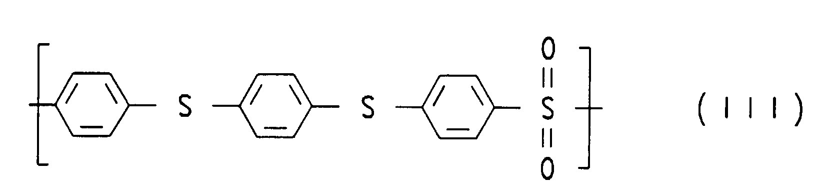 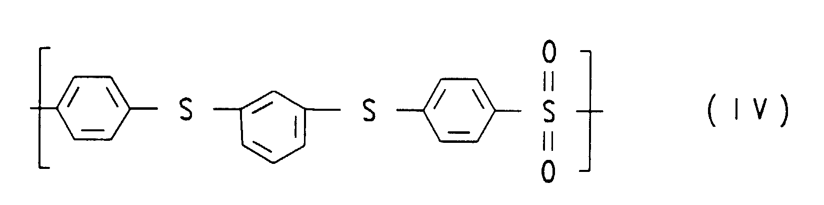 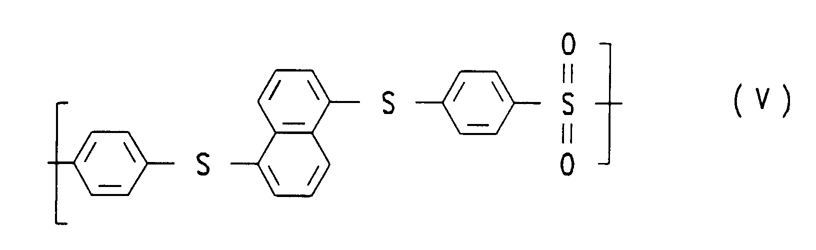 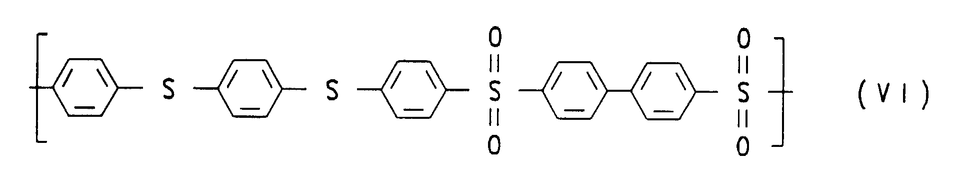 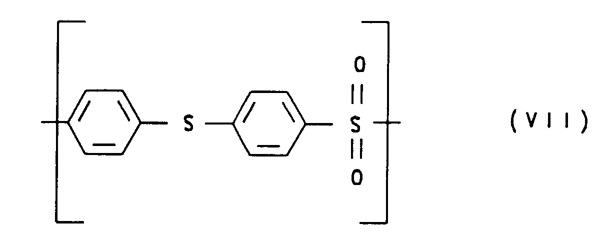 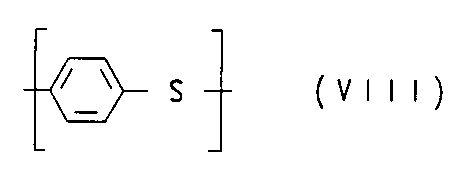 eingesetzt wird.

6. Verfahren nach einem oder mehreren der Ansprüche 1 bis 5, dadurch gekennzeichnet, daß ein Polyphenylenthioether mit einem mittleren Molekulargewicht von 4 000 bis 200 000 und einer mittleren Teilchengröße von 5x10⁻⁶ bis 500x10⁻⁶ eingesetzt wird.

7. Verfahren gemäß Ansprüche 1-6 dadurch gekennzeichnet, daß in einem weiteren Verfahrensschritt Form - und Funktionsteile hergestellt werden.

8. Verfahren gemäß Anspruch 7 dadurch gekennzeichnet, daß hochtemperatur - und hochchemikalienresistente Formteile hergestellt werden.

## Claims

1. A process for oxidizing polyarylene sulfides in two stages, which comprises in the first stage oxidizing a polymer in solid form in a suspension medium with ozone at a reaction temperature of from minus 10°C to +80°C and a reaction time of up to 2 hours, with the sulfide group being converted partially or completely into the sulfoxide group, and in the second stage reacting the resulting reaction product in acetic acid with the addition of equilibrium peracids and/or in acetic acid with hydrogen peroxide in the presence of 0.1-10% by volume of sulfuric acid, with the oxidant being added in amounts such that compounds comprising arylene units and sulfide/ sulfoxide/sulfone units or sulfoxide/sulfone units are obtained.

2. The process as claimed in claim 1, wherein the suspension medium used in the first stage is a mineral acid, an aliphatic alcohol, an aliphatic carboxylic acid each having 1-6 carbon atoms in the alkyl radical, a carboxylic ester of these compounds, halogenated or non-halogenated hydrocarbons having 1-12 carbon atoms or a mixture of the specified compounds.

3. The process as claimed in claim 1 or 2, wherein the equilibrium per-acid is peracetic acid.

4. The process as claimed in one or more of claims 1 to 3, wherein the acetic acid used is concentrated acetic acid.

5. The process as claimed in one or more of claims 1 to 4, wherein a polyarylene thioether is used which has repeating units of the formulae:

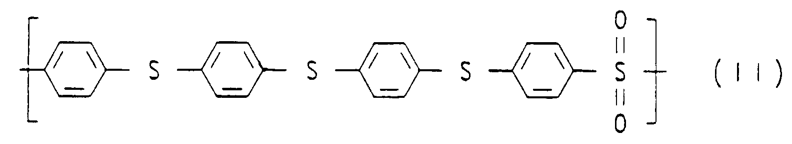

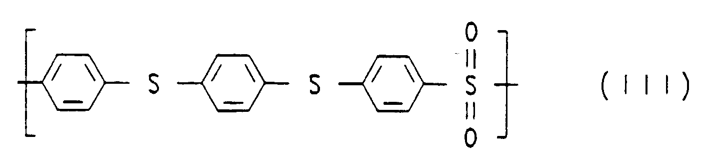

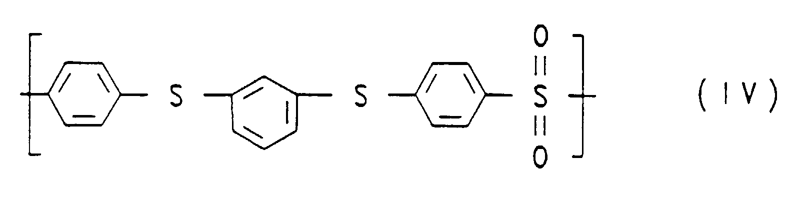

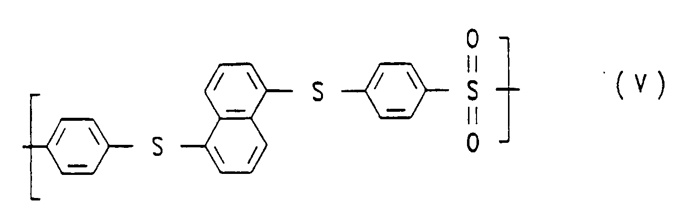

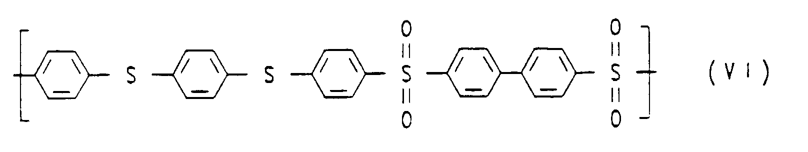

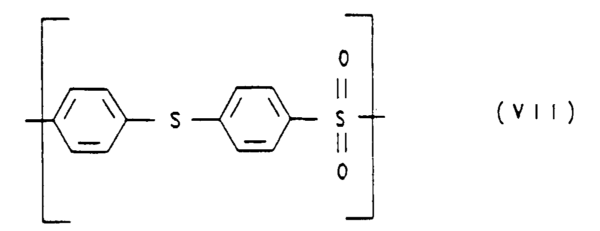

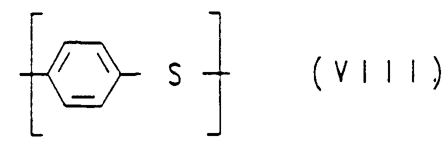

6. The process as claimed in one or more of claims 1 to 5, wherein a polyphenylene thioether is used which has an average molecular weight of from 4,000 to 200,000 and an average particle size of from 5×10⁻⁶ to 500×10⁻⁶ m.

7. The process as claimed in claims 1-6, wherein, in a further process step, molded and functional parts are produced.

8. The process as claimed in claim 7, wherein molded parts having high temperature resistance and high resistance to chemicals are produced.

## Revendications

1. Procédé d'oxydation de poly(sulfures d'aryle) en deux étapes, caractérisé en ce que, dans la première étape, un polymère sous forme solide est oxydé avec de l'ozone dans un milieu de mise en suspension, à une température de réaction comprise entre -10°C et +80°C et avec un temps de réaction allant jusqu'à 2 heures, la conversion du radical sulfure résultant partiellement ou totalement en un radical sulfoxyde, et le produit de réaction obtenu étant converti dans la deuxième étape en acide acétique, par addition de peracides en équilibre et/ou d'acide acétique avec un peroxyde d'hydrogène en présence de 0,1 à 10% en poids d'acide sulfurique, et l'agent d'oxydation étant ajouté en quantité telle que l'on obtient des composés constitués d'unités aryle et d'unités sulfure/sulfoxyde/sulfone ou d'unités sulfoxyde/sulfone.

2. Procédé suivant la revendication 1, caractérisé en ce que, dans la première étape, on utilise comme milieu de mise en suspension de l'acide minéral, un alcool aliphatique, un acide carbonique aliphatique avec chaque fois 1-6 atomes de carbone dans le radical alcoyle, un ester d'acide carbonique de ces composés, des hydrocarbures halogénés ou non halogénés avec 1-12 atomes de carbone, ou un mélange desdits composés.

3. Procédé suivant la revendication 1 ou 2, caractérisé en ce que le peracide en équilibre est l'acide peracétique.

4. Procédé suivant l'une ou plusieurs des revendications 1 à 3, caractérisé en ce que l'acide acétique utilisé est de l'acide acétique concentré.

5. Procédé suivant l'une ou plusieurs des revendications 1 à 4, caractérisé en ce qu'on utilise un poly(thioéther d'arylène) comportant des unités répétitives de formules :

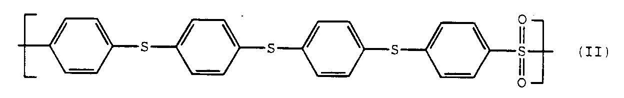

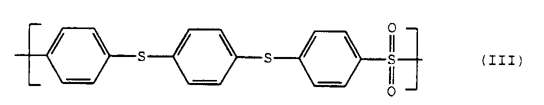

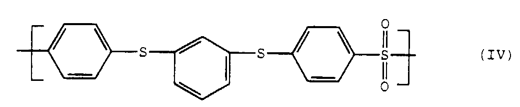

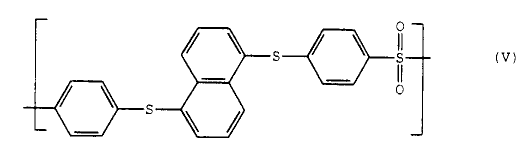

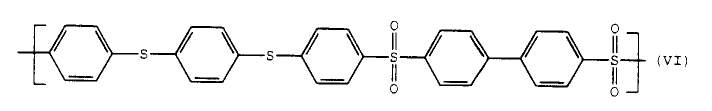

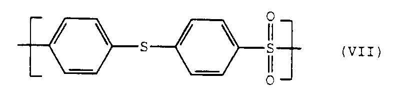

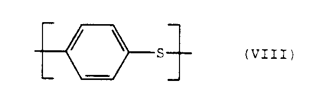

6. Procédé suivant l'une ou plusieurs des revendications 1 à 5, caractérisé en ce qu'on utilise un poly(thioéther de phénylène) ayant un poids moléculaire moyen de 4000 à 200 000 et une taille particulaire moyenne de 5 X 10⁻⁶ à 500 X 10⁻⁶ m.

7. Procédé suivant l'une quelconque des revendications 1 à 6, caractérisé en ce que, dans une autre étape du procédé, on prépare des pièces usinées et des pièces fonctionnelles.

8. Procédé suivant la revendication 7, caractérisé en ce que l'on prépare des pièces usinées présentant une résistance élevée à la température et aux produits chimiques.
